# EUROPEAN PATENT APPLICATION

(11) **EP 2 670 017 A2**
(43) Date of publication of application: **04.12.2013**
(21) Application number: 13152544.6
(22) Date of filing: 24.01.2013
(51) Int. Cl.: H02J 5/00, H02J 7/00, H02J 7/02

(54) **Charging device**

(30) Priority: 28.05.2012 JP 2012120691
(71) Applicant: Kabushiki Kaisha Toshiba, Tokyo 105-8001 (JP)
(72) Inventor: Nakagawa, Hideyuki, Tokyo 105-8001 (JP)
(74) Representative: Henkel, Breuer & Partner

(57) **Abstract**

According to one embodiment, a charging device (1) configured to charge a device (100) placed at a charging area (A) in a non-contact manner includes: a determination module (11); a charge controller (12); and an information module (13). The determination module (11) determines a priority order indicating from which one of a plurality of devices (100) is to be preferentially charged, based on positions of the respective devices (100) placed at the charging area (A), when the devices (100) are placed at the charging area (A). The charge controller (12) controls the charging of the devices (100) placed at the charging area (A) according to the priority orders. The informing module (13) provides information of a priority position in the charging area (A) having a higher priority order than the priority orders of the devices (100) already placed at the charging area (A).

## Description

### FIELD

An embodiment described herein relates generally to a charging device that charges devices in a non-contact manner.

### BACKGROUND

Conventionally, there is known a charging device which charges, in a non-contact manner, devices each having a built-in rechargeable secondary battery. In view of such charging device for charging devices placed at a predetermined charging area in a non-contact manner, when a plurality of charging devices are placed at the charging area, the charging device determines a priority order based on a position of the charging area where each of the devices are placed, and sequentially charges the devices in accordance with the determined priority order.

However, according to the conventional charging device, even if a user places a device desired to preferentially be charged in the charging area, sometimes the user may not be able to recognize where to place such device in the charging area. Therefore, it is desired to improve user-friendliness.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary external view of a charging device according to an embodiment;
FIG. 2 is an exemplary block diagram of a hardware configuration of the charging device in the embodiment;
FIG. 3 is an exemplary diagram explaining a method for determining priority orders of a plurality of devices placed on a charging area, in the embodiment;
FIG. 4 is an exemplary diagram explaining a specific example of charge control based on a prioritized charge mode, in the embodiment;
FIG. 5 is an exemplary flow chart illustrating an example of the charge control based on the prioritized charge mode, in the embodiment;
FIG. 6 is an exemplary diagram explaining a specific example of the charge control based on an equalizing charge mode, in the embodiment;
FIG. 7 is an exemplary flow chart illustrating an example of the charge control based on the equalizing charge mode, in the embodiment;
FIGS. 8A and 8B are exemplary diagrams explaining operations of a display module by control of an informing module, in the embodiment;
FIGS. 9A and 9B are another exemplary diagrams explaining the operations of the display module by the control of the informing module, in the embodiment; and
FIG. 10 is an exemplary diagram of markings applied to the charging area, in the embodiment.

### DETAILED DESCRIPTION

In general, according to one embodiment, a charging device configured to charge a device placed at a charging area in a non-contact manner, comprises: a determination module; a charge controller; and an informing module. The determination module determines a priority order indicating from which one of a plurality of devices is to be preferentially charged, based on positions of the respective devices placed at the charging area, when the devices are placed at the charging area. The charge controller controls the charging of the devices placed at the charging area according to the priority orders. The informing module provides information of a priority position in the charging area having a higher priority order than the priority orders of the devices already placed at the charging area.

A charging device according to an embodiment will be described below with reference to the accompanying drawings.

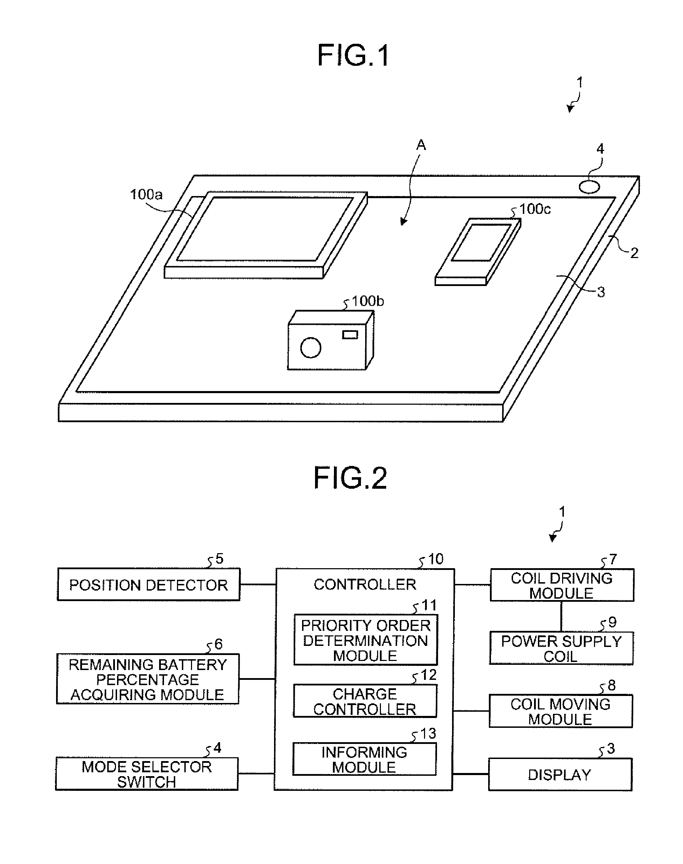

FIG. 1 is an external view of a charging device 1 according to the embodiment. The charging device 1 is configured as a charge pad comprising a pad-like housing 2. On an upper surface of the charging device 1, there is provided a charging area A on which devices to be charged are placed. The charging area A has a size that allows the devices to be placed thereon. FIG. 1 illustrates a state in which three of such devices 100a, 100b, and 100c are placed in the charging area A. Hereinafter, the devices placed in the charging area A will be collectively called devices 100, except for the case when the devices 100a, 100b, and 100c are to be specifically distinguished from each other.

The charging device 1 performs charging of the devices 100 placed in the charging area A in a non-contact manner, for example, using an electromagnetic induction system. In this case, the devices 100 incorporating each a power receiving coil can be directly placed on the charging area A. Each of the devices 100 not incorporating a power receiving coil only needs to be mounted on a special adapter provided with a power receiving coil and be placed on the charging area A. The charging device 1 and the devices 100 (or the adapters thereof) comply with a common standard for wireless power supply. Standards for the wireless power supply include, for example, Qi (pronounced "chee") which is an international standard for wireless power supply established by the Wireless Power Consortium. Note that the system for charging is not limited to the electromagnetic induction system but may be other system, such as an electromagnetic field resonance system.

When a plurality of such devices 100 are placed on the charging area A, the charging device 1 can determine a priority order based on positions of the respective devices 100 placed on the charging area A, and can perform charging of the respective devices 100 according to the determined priority order. The charging device 1 can also perform equal charging of the devices 100 placed on the charging area A. The former mode of charging is called a prioritized charge mode while the later mode is called an equalizing charge mode. The prioritized charge mode and the equalizing charge mode are defined as control modes by a charge controller to be described later. The charge controller controls charging of the devices 100 placed on the charging area A in either of the prioritized charge mode and the equalizing charge mode.

The housing 2 of the charging device 1 is provided, for example, at a position thereof overlapping with the charging area A, with a display 3 that performs display for informing a user of a priority position in the charging area A having a higher priority order than the priority orders of the device 100 already placed on the charging area A. The housing 2 of the charging device 1 is also provided with a mode selector switch 4 operated by the user for switching between the prioritized charge mode and the equalizing charge mode.

FIG. 2 is a block diagram illustrating a hardware configuration of the charging device 1. The charging device 1 comprises a controller 10 that controls overall operation of the charging device 1. The controller 10 is connected with a position detector 5, a remaining battery percentage acquiring module 6, the mode selector switch 4, a coil driving module 7, a coil moving module 8, and the display 3. A power supply coil 9 is connected to the coil driving module 7, and is movable in the charging area A by the coil moving module 8.

The position detector 5 detects a position of each of the devices 100 placed on the charging area A. The position of the devices 100 detected by the position detector 5 is a two-dimensional coordinate position in the charging area A. The position detector 5 detects, for example, a power receiving coil of the device 100 by using a method disclosed in Japanese Patent Application Laid-open No. 2010-183706, or the like, and thus can detect, as the position of the devices 100, the two-dimensional coordinate position where an arbitrary point of the power receiving coil (such as the center of the coil) lies in the charging area A. The position detector 5 may also detect the position of the devices 100 placed on the charging area A by using other methods, such as by detecting the devices 100 with an optical sensor or a pressure sensor, and then by detecting, as the position of the device 100, the two-dimensional coordinate position where an arbitrary point of the devices 100 (such as the center of a surface of the device 100 in contact with the charging area A) lies in the charging area A. Each time one of the devices 100 is placed in the charging area A, the position detector 5 detects the position of the one of the devices 100, and sends position information (coordinate information) representing the position of the one of the devices 100 to the controller 10.

The remaining battery percentage acquiring module 6 acquires the percentage of the remaining battery of each of the devices 100 placed on the charging area A. The percentage of the remaining battery is the percentage (in %) of a current capacity to an original capacity of a secondary battery incorporated in the device 100. The remaining battery percentage acquiring module 6 can acquire the percentage of the remaining battery from the device 100 placed the charging area A, for example, by using communication functions provided in the charging device 1 and the device 100. The communication functions in this case may use the power supply coil 9 on the side of the charging device 1 and the power receiving coil on the side of the device 100 as antennae to perform information communication, or may use separately provided wireless communication instruments for the information communication. The remaining battery percentage acquiring module 6 acquires the percentage of the remaining battery from the device 100 (currently to be charged) placed on the charging area A, for example, periodically at predetermined intervals set in advance, and sends the acquired data to the controller 10.

The mode selector switch 4 is configured, for example, as a push-button switch which is operable by user's press down operation. In accordance with the operation of the user, the mode selector switch 4 sends a mode switching signal to the controller 10.

Under the control of the controller 10, the coil driving module 7 energizes the power supply coil 9 to drive the power supply coil 9.

Under the control of the controller 10, the coil moving module 8 moves the power supply coil 9 in the charging area A so as to arrange the power supply coil 9 at a position opposed to the power receiving coil of the device 100 to be charged.

Under the control of the controller 10, the display 3 performs display for informing the user of the above-described priority position. The display 3 can be composed, for example, of a plurality of light-emitting elements such as light-emitting diodes (LEDs) arranged in a matrix state in the housing 2 of the charging device 1 so as to overlap with the charging area A. In this case, it is possible to inform the user of the priority position by lighting of the light-emitting elements in a position overlapping with the priority position. The display 3 can also be composed, for example, of a sheet-like display such as an electronic paper display arranged on the upper surface of the housing 2 so as to overlap with the charging area A. In this case, it is possible to inform the user of the priority position by performing some kind of display in a display area overlapping with the priority position. Specific examples of the display by the display 3 will be described later in detail.

The controller 10 controls the overall operation of the charging device 1. The controller 10 can be configured, for example, as a microcontroller comprising a central processing unit (CPU), a read only memory (ROM), a random access memory (RAM), an input/output circuit, and the like. In this case, the CPU executes a program stored in the ROM by using the RAM as a work area, and thus, various control functions for controlling the operation of the charging device 1 are implemented in the controller 10. For example, as illustrated in FIG. 2, functions of a priority order determination module 11, a charge controller 12, and an informing module 13 are implemented in the controller 10. A part or all of the priority order determination module 11, the charge controller 12, and the informing module 13 can be implemented, instead of as a functional configuration of the controller 10, by using a special-purpose hardware element such as an application specific integrated circuit (ASIC) or a field-programmable gate array (FPGA).

When a plurality of such devices 100 are placed on the charging area A, the priority order determination module 11 determines, based on the positions of the respective devices 100 placed on the charging area A, the priority orders indicating from which one of the devices 100 the charging is to be preferentially performed. The priority order determination module 11 determines the priority orders each time a new device 100 is placed on the charging area A, or each time a position of the device 100 placed on the charging area A is changed. For example, when a new device 100 is placed on the charging area A and position information of the newly placed device 100 is entered from the position detector 5 into the controller 10, the priority order determination module 11 determines, based on the position information of the newly placed device 100 and position information of the devices 100 already placed on the charging area A, the priority orders of the respective devices 100 according to a predetermined rule.

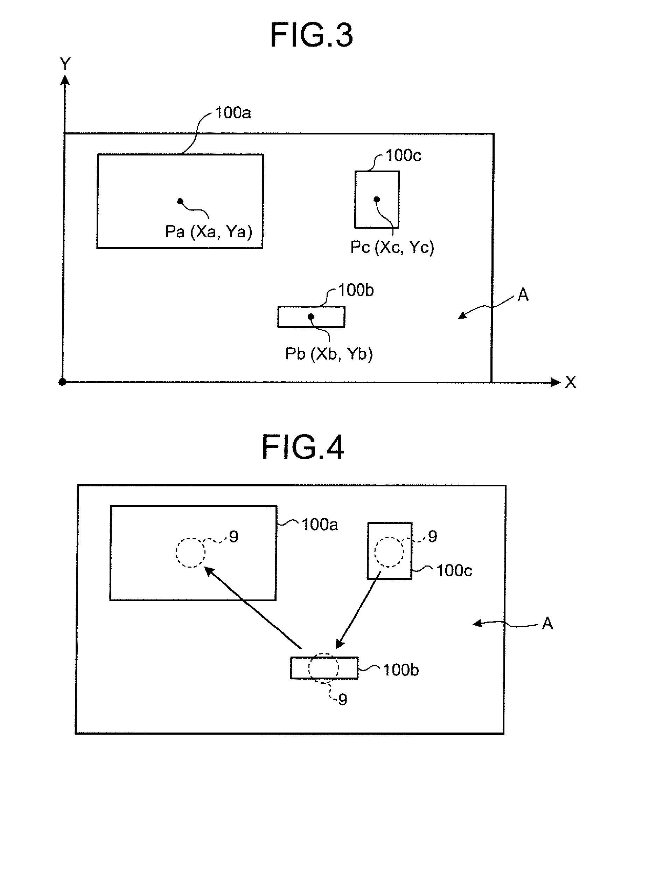

FIG. 3 is a diagram explaining an example of a method in which the priority order determination module 11 determines the priority orders of the devices 100 placed on the charging area A. The position in the charging area A is represented as a position in two-dimensional coordinates of the X-coordinate and the Y-coordinate. In the example of FIG. 3, position information Pa of the device 100a is represented as (Xa, Ya); position information Pb of the device 100b is represented as (Xb, Yb); and position information Pc of the device 100c is represented as (Xc, Yc). Here, the following relations are satisfied: Xa < Xb < Xc, and Yb < Yc = Ya.

Assume that a rule for determining the priority orders is set as follows: the priority order is higher as the value of the X-coordinate is larger, and, between positions having the same X-coordinate value, the priority order is higher as the value of the Y-coordinate is larger. In this case, because Xa < Xb < Xc in the example of FIG. 3, the priority order determination module 11 determines the priority order of the device 100c to be the first, the priority order of the device 100b to be the second, and the priority order of the device 100a to be the third.

Assume that a rule for determining the priority order is set as follows: the priority order is higher as the value of the Y-coordinate is larger, and, between positions having the same Y-coordinate value, the priority order is higher as the value of the X-coordinate is larger. In this case, because Yb < Yc = Ya, and Xa < Xc in the example of FIG. 3, the priority order determination module 11 determines the priority order of the device 100c to be the first, the priority order of the device 100a to be the second, and the priority order of the device 100b to be the third.

Note that the user often recognizes the position of the device 100 as a region having a certain area instead of a point such as a coordinate point. Accordingly, the priority orders of the devices 100 placed on the charging area A may be determined by comparing predetermined areas around coordinate points indicated by position information with relative to each other, instead of comparing exact coordinate values with each other as described above. Note also that the rule for determining the priority order is not limited to the above described examples, but it is possible to set various rules that can determine the order based on positions.

The charge controller 12 controls the charging of the devices 100 placed on the charging area A by controlling the operations of the coil driving module 7 and the coil moving module 8. As described above, the charge controller 12 has the two control modes of the prioritized charge mode and the equalizing charge mode, and controls the charging of the devices 100 placed on the charging area A while switching between the two control modes according to settings or according to the operation of the user through the mode selector switch 4.

First, the charge control based on the prioritized charge mode will be described. The prioritized charge mode is a control mode of controlling the charging of the devices 100 placed on the charging area A according to the priority orders determined by the priority order determination module 11. When controlling the charging of the devices 100 in the prioritized charge mode, the charge controller 12 first controls the operation of the coil moving module 8 based on the position information of a device 100 having a higher priority order, and thus moves the power supply coil 9 to a position opposed to the power receiving coil of the device 100 having the higher priority order. Then, in the state in which the power supply coil 9 is arranged in the position opposed to the power receiving coil of the device 100 having the higher priority order, the charge controller 12 controls the operation of the coil driving module 7 to perform predetermined energization of the power supply coil 9, and thus charges the device 100 having the higher priority order by using the electromagnetic induction system. While charging the device 100 having the higher priority order, the charge controller 12 monitors the remaining battery percentage of the device 100 having the higher priority order. The remaining battery percentage is periodically acquired by the remaining battery percentage acquiring module 6. Then, when the remaining battery percentage of the device 100 having the higher priority order reaches a predetermined threshold, the charge controller 12 controls the operation of the coil moving module 8 based on the position information of a device 100 having a lower priority order, and thus moves the power supply coil 9 to a position opposed to the power receiving coil of the device 100 having the lower priority order. Then, in the state in which the power supply coil 9 is arranged in the position opposed to the power receiving coil of the device 100 having the lower priority order, the charge controller 12 controls the operation of the coil driving module 7 to perform predetermined energization of the power supply coil 9, and thus charges the device 100 having the lower priority order by using the electromagnetic induction system. The charge controller 12 applies the above-described control to the devices 100 in a sequential manner from a device 100 having the highest priority order to a device 100 having the lowest priority order.

FIG. 4 is a diagram explaining a specific example of the charge control based on the prioritized charge mode. The example of FIG. 4 assumes the following: the priority order of the device 100c is determined to be the first; the priority order of the device 100b is determined to be the second; and the priority order of the device 100a is determined to be the third. In this case, the charge controller 12 first moves the power supply coil 9 to a position opposed to the power receiving coil of the device 100c, and charges the device 100c. Then, when the remaining battery percentage of the device 100c reaches the predetermined threshold, the charge controller 12 next moves the power supply coil 9 to a position opposed to the power receiving coil of the device 100b, and charges the device 100b. Then, when the remaining battery percentage of the device 100b reaches the threshold, the charge controller 12 finally moves the power supply coil 9 to a position opposed to the power receiving coil of the device 100a, and charges the device 100a.

In the prioritized charge mode, the threshold (threshold with respect to the remaining battery percentage of the device 100 having the higher priority order) for switching the device to be charged may be 100% indicating a full charge, or may be set to an arbitrary value such as 50%. In the case in which the threshold is set to an arbitrary value such as 50%, when the remaining battery percentage of all of the devices 100 placed on the charging area A reach the threshold, the charge controller 12 automatically switches the control mode from the prioritized charge mode to the equalizing charge mode, and continues charging the devices 100. In another case in which the mode selector switch 4 is operated while the charge controller 12 is controlling the charging of the devices 100 in the prioritized charge mode, the charge controller 12 switches the control mode from the prioritized charge mode to the equalizing charge mode, regardless of the remaining battery percentage of the device 100 to be charged.

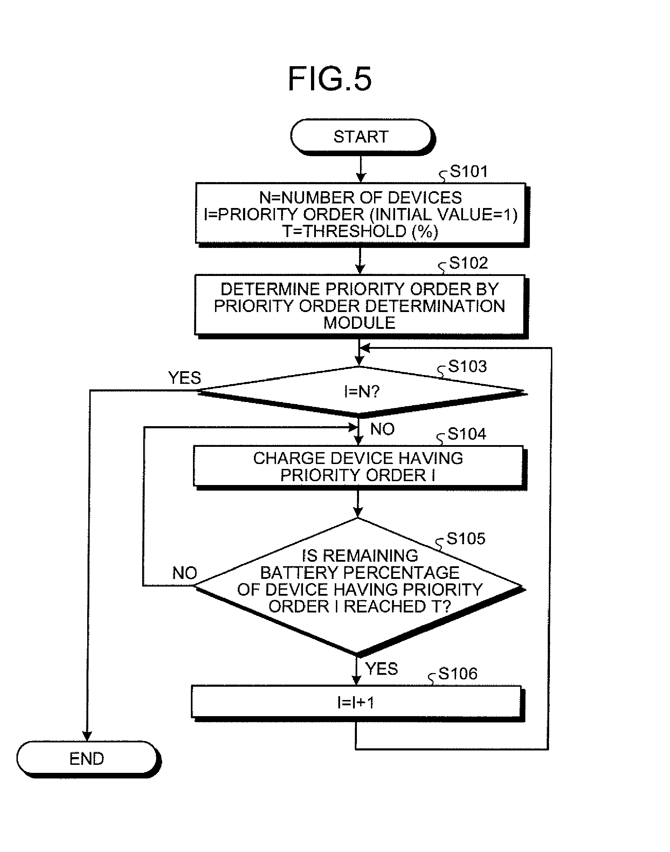

FIG. 5 is a flowchart illustrating an example of the charge control based on the prioritized charge mode. When a device 100 is newly placed on the charging area A, or when the position of the device 100 placed on the charging area A is changed, the charge control based on the prioritized charge mode, for example, illustrated by the flowchart of FIG. 5 is started.

When the charge control based on the prioritized charge mode is started, first, the charge controller 12 sets the number (number of devices) N of devices 100 placed on the charging area A and a threshold T with respect to the remaining battery percentage in a register, and sets 1 as an initial value of a priority order I (S101). Then, when the priority order determination module 11 has determined the priority orders of the respective devices 100 placed on the charging area A (S102), the charge controller 12 uses the value of the priority order I set in the register to perform control so that the devices 100 are charged in a sequential manner according to the priority orders (S103 to S106).

More specifically, first, at S103, the charge controller 12 compares the value of the priority order I set in the register with the number of devices N. Then, if the priority order I is less than the number of devices N (No at S103), the charge controller 12 controls, at S104, the operations of the coil driving module 7 and the coil moving module 8 to charge the device 100 having the priority order I. While charging the device 100 having the priority order I, the charge controller 12 compares, at S105, the threshold T with the remaining battery percentage of the device 100 having the priority order I that is periodically acquired by the remaining battery percentage acquiring module 6. Until the remaining battery percentage of the device 100 having the priority order I reaches the threshold T (No at S105), the charge controller 12 continues the charging of S103, and, when the remaining battery percentage of the device 100 having the priority order I reaches the threshold T (Yes at S105), the charge controller 12 increments, at S106, the value of the priority order I set in the register (I = I + 1), and returns to S103. Then, until the value of the priority order I reaches the number of devices N (No at S103), the charge controller 12 repeats the processing from S104 to S106, and, when the value of the priority order I reaches the number of devices N (Yes at S103), the charge control based on the prioritized charge mode is terminated.

If the threshold T with respect to the remaining battery percentage of the devices 100 is set to 100% indicating a full charge, the charging of the devices 100 is terminated when the charge control based on the prioritized charge mode is terminated. If the threshold T with respect to the remaining battery percentage of the devices 100 is set to an arbitrary value (such as 50%) other than 100%, the charge controller 12 switches, when the charge control based on the prioritized charge mode is terminated, the control mode from the prioritized charge mode to the equalizing charge mode, and continues controlling the charging of the devices 100 based on the equalizing charge mode.

Next, the charge control based on the equalizing charge mode will be described. The equalizing charge mode is a control mode of performing control so as to equally charge the devices 100 placed on the charging area A, regardless of the priority orders determined by the priority order determination module 11. When controlling the charging of the devices 100 in the equalizing charge mode, the charge controller 12, for example, controls the operation of the coil moving module 8 based on the position information of the devices 100 so as to move the power supply coil 9 to positions opposed to the power receiving coils of the devices 100 in a sequential manner at regular time intervals. In addition, the charge controller 12 controls the operation of the coil driving module 7 so as to charge the devices 100 in a sequential manner for a given time period for each device 100 until the remaining battery percentage of all of the devices 100 reach 100%.

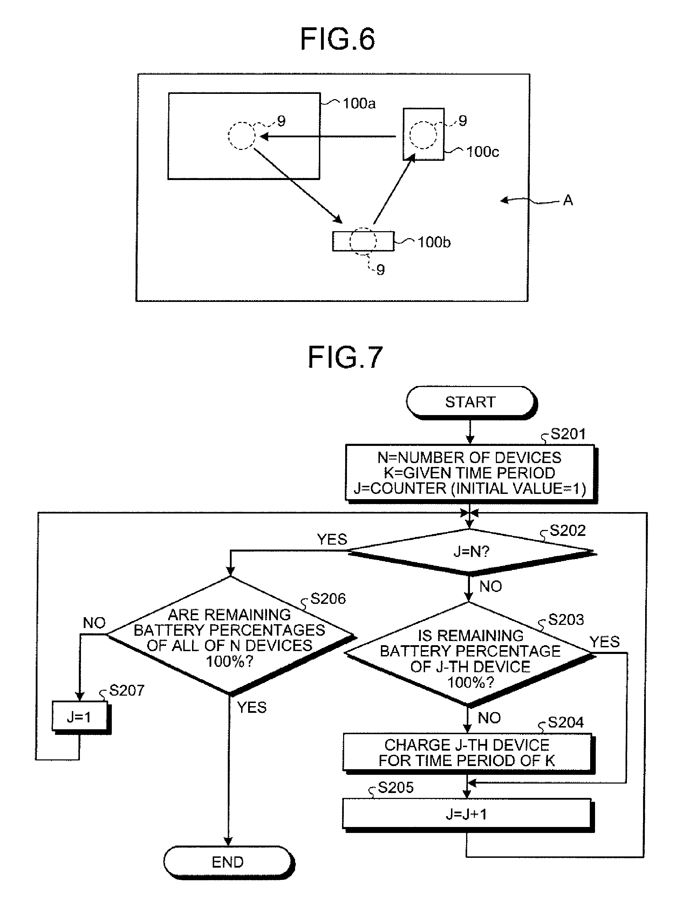

FIG. 6 is a diagram explaining a specific example of the charge control based on the equalizing charge mode. In the equalizing charge mode, the order of charging the devices 100 in a sequential manner for a given time period for each device 100 is arbitrarily set. The example of FIG. 6 assumes that the device 100a is set to be the first, the device 100b to be the second, and the device 100c to be the third. In this case, the charge controller 12 first moves the power supply coil 9 to the position opposed to the power receiving coil of the device 100a, and charges the device 100a for a given time period. Then, after the given time period has passed, the charge controller 12 moves the power supply coil 9 to the position opposed to the power receiving coil of the device 100b, and charges the device 100b for the given time period. Then, after the given time period has passed, the charge controller 12 moves the power supply coil 9 to the position opposed to the power receiving coil of the device 100c, and charges the device 100c for the given time period. Thereafter, until the remaining battery percentages of all of the devices 100a, 100b, and 100c reach 100%, the charge controller 12 repeats the charging at regular time intervals in the order of the device 100a, the device 100b, and the device 100c, and, when the remaining battery percentages of all of the devices 100a, 100b, and 100c reach 100%, the charge controller 12 terminates the charge control based on the equalizing charge mode.

FIG. 7 is a flow chart illustrating an example of the charge control based on the equalizing charge mode. When the control mode is switched from the prioritized charge mode to the equalizing charge mode, or when, in the case of the operation only in the equalizing charge mode, a device 100 is newly placed on the charging area A or the position of the device 100 placed on the charging area A is changed, the charge control based on the equalizing charge mode, for example, illustrated by the flowchart of FIG. 7 is started.

When the charge control based on the equalizing charge mode is started, first, the charge controller 12 sets, in the register, the number (number of devices) N of the devices 100 placed on the charging area A and a given time period K serving as a charging time for one time of charging of one of the devices 100, and sets 1 as an initial value of a counter J (S201). Note that the counter J represents the order of charging the devices 100 in a sequential manner for the given time period for each device 100. Then, the charge controller 12 performs control so that the charging is performed in a sequential manner from the device 100 positioned at the first order (with the counter J having a value of 1) (S202 to S205).

More specifically, first, at S202, the charge controller 12 compares the value of the counter J set in the register with the number of devices N. Then, if the counter J is less than the number of devices N (No at S202), the charge controller 12 determines, at S203, whether the remaining battery percentage of the J-th device 100 reaches 100%. Then, if the remaining battery percentage of the device 100 corresponding to the counter J is less than 100% (No at S203), the charge controller 12 controls, at S204, the operations of the coil driving module 7 and the coil moving module 8 to charge the J-th device 100 for the given time period K. If the remaining battery percentage of the J-th device 100 reaches 100% (Yes at S203), or after the J-th device 100 is charged for the given time period K at S204, the charge controller 12 increments, at S205, the value of the counter J set in the register (J = J + 1), and returns to S202. Then, until the value of the counter J reaches the number of devices N (No at S202), the charge controller 12 repeats the processing from S203 to S205, and, when the value of the counter J reaches the number of devices N (Yes at S202), moves to S206.

At S206, the charge controller 12 determines whether the remaining battery percentages of all of the N devices 100 placed on the charging area A have reached 100%. If any one of the remaining battery percentages of the devices 100 has not reached 100% (No at S206), the charge controller 12 initializes, at S207, the value of the counter J set in the register to 1, and returns to S202 to repeat the processing after S202. Then, if the remaining battery percentages of all of the N devices 100 placed on the charging area A reach 100% (Yes at S206), the charge control based on the equalizing charge mode is terminated.

In should be noted that, although the description has been made above of the configuration in which the single power supply coil 9 is moved in the charging area A by the coil moving module 8 and charges the devices 100, the charging device 1 may be configured to be provided with a plurality of such power supply coils 9 in a fixed manner in the charging area A. In the case of this configuration, in the prioritized charge mode, control is first performed so that the energizing power to the power supply coils 9 positioned near a device 100 having a higher priority order is set higher than the energizing power to the other power supply coils 9. Then, when the remaining battery percentage of the device 100 having the higher priority order has reached a threshold, control is performed so that the energizing power to the power supply coil 9 positioned near a device 100 having a lower priority order is set higher than the energizing power to the other power supply coils 9. In other words, the charge control in accordance with the priority orders is applied to the devices 100 by controlling the energizing power to the power supply coils 9. In the equalizing charge mode, the energizing power only needs to be controlled to be supplied to the power supply coils 9 in an equalizing manner. In the case of this configuration, the coil moving module 8 is not required.

The informing module 13 informs the user of a priority position whose priority order is determined by the priority order determination module 11 to be higher than that of the device 100 already placed on the charging area A, for example, by controlling the operation of the display 3 provided in the position overlapping with the charging area A. More specifically, the informing module 13 identifies a priority position having a higher priority order than that of the device 100 already placed on the charging area A, based on the position information of the device 100 already placed in the charging area A (if a plurality of such devices 100 are placed on the charging area A, the position information of a device 100 having the highest priority order therealong) and the rule for determining the priority order. For example, denote the position information of the device 100 already placed on the charging area A as Pn (Xn, Yn), and assume that the rule for determining the priority order is set, as described above, so that the priority order is higher as the values of the X-coordinate and the Y-coordinate are larger. Then, the informing module 13 identifies, as the priority position, a region in the charging area A in which the X-coordinate is Xn or more and the Y-coordinate is Yn or more. The informing module 13 then controls the operation of the display 3 provided in the position overlapping with the charging area A so that the identified priority position can be distinguished from other positions, and thus informs the user of the identified priority position.

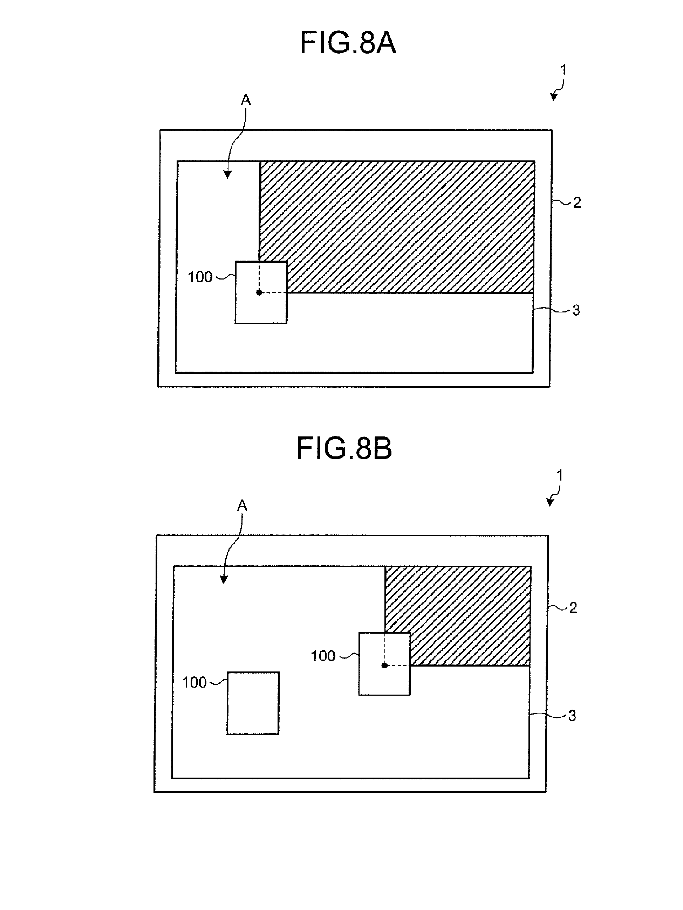

FIGS. 8A and 8B are diagrams explaining examples of the operation of the display 3 by the control of the informing module 13. FIG. 8A illustrates the operation of the display 3 when a first device 100 is placed on the charging area A, and FIG. 8B illustrates the operation of the display 3 when a second device 100 is placed on the charging area A. The examples employ, as the rule for determining the priority order, the rule that the priority order is higher as the values of the X-coordinate and the Y-coordinate are larger. In the same manner as in FIG. 3, the value of the X-coordinate increases as one moves to the right in FIGS. 8A and 8B, and the value of the Y-coordinate increases as one moves up in FIGS. 8A and 8B.

First, when the first device 100 is placed on the charging area A, the informing module 13 identifies a priority position having a higher priority order than that of the first device 100 placed on the charging area A, based on the position information of the first device 100 and the above-described rule. Then, as illustrated in FIG. 8A, the informing module 13 informs the user of the priority position by controlling the operation of the display 3 so that, in the display area of the display 3 overlapping with the charging area A, a region indicated by hatching in FIG. 8A corresponding to the priority position is distinguished from other region. If, for example, the display 3 is composed of a plurality of LEDs arranged in a matrix state, the informing module 13 informs the user of the priority position by lighting the LEDs arranged in the region indicated by hatching in FIG. 8A. If, alternatively, the display 3 is composed of a sheet-like display such as an electronic paper display, the informing module 13 informs the user of the priority position by applying display indicative of the priority position to the region indicated by hatching in FIG. 8A. Thereby, when placing the second device 100 in the charging area A, the user can correctly recognize the priority position having a higher priority order than that of the first device 100.

Thereafter, when the second device 100 is placed on the priority position of the charging area A, the informing module 13 identifies a new priority position having a higher priority order than that of the second device 100, based on the position information of the second device 100 and the above-described rule. Then, as illustrated in FIG. 8B, the informing module 13 informs the user of the new priority position by controlling the operation of the display 3 so that, in the display area of the display 3 overlapping with the charging area A, a region indicated by hatching in FIG. 8B corresponding to the new priority position is distinguished from other region. Thereby, when a third device 100 is to be placed in the charging area A, the user can correctly recognize the priority position having a higher priority order than that of the second device 100.

As described above, when the new device 100 is placed at the priority position displayed by the display 3, the priority position displayed by the display 3 is updated based on the position information of the newly placed device 100. When the new device 100 is placed at a position other than the priority position displayed by the display 3, the priority position displayed by the display 3 is not updated. The display 3 may perform the display differently between the case in which the new device 100 is placed at the priority position and the case in which the new device 100 is placed at a position that is not the priority position. If, for example, the new device 100 is placed at the priority position and thus the priority position is updated, the display 3 may highlight the new priority position for a predetermined time period by changing color or blinking. On the other hand, if the new device 100 is placed at a position that is not the priority position, the display 3 may display, for a predetermined time period, the currently displayed priority position in a different color or in a blinking manner. In this manner, the display 3 can perform the display differently between the case in which the new device 100 is placed at the priority position and the case in which the new device 100 is placed at a position that is not the priority position, so that the user can surely recognize whether the device 100 is placed in the priority position.

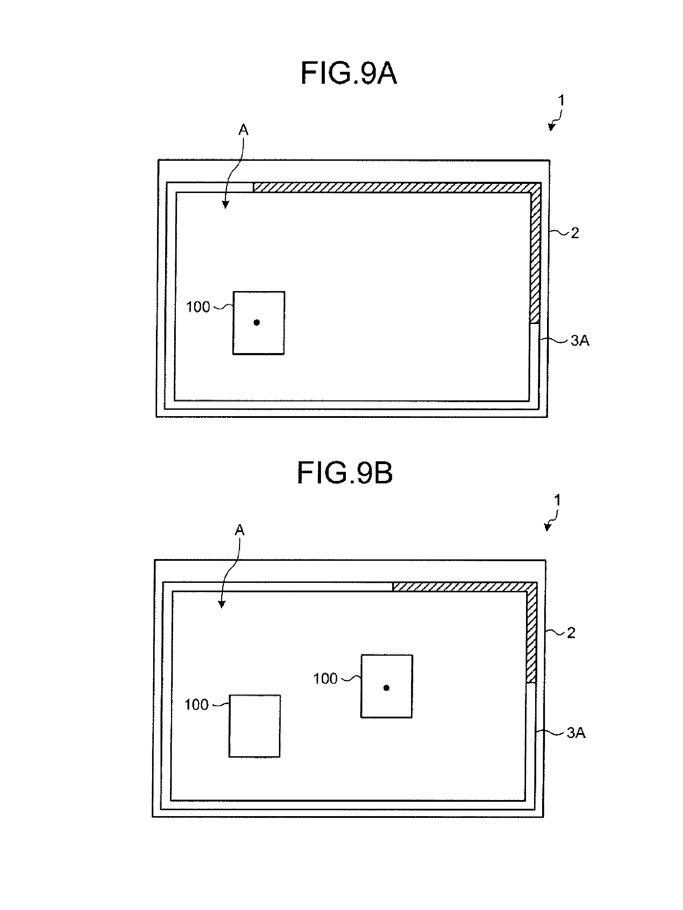

While the description made above is the examples in which the display 3 is provided in the position overlapping with the charging area A, there may be a case in which a display 3A is provided around the charging area A, for example, as illustrated in FIGS. 9A and 9B. The display 3A can be configured, for example, by arranging a plurality of light-emitting elements such as LEDs in a position adjacent to the charging area A of the housing 2. In this case, when the first device 100 is placed in the charging area A, the informing module 13 identifies the priority position having a higher priority order than that of the first device 100, and, as illustrated in FIG. 9A, informs the user of the priority position by lighting the light-emitting elements in a position indicated by hatching in FIG. 9A bordering the priority position. Thereafter, when the second device 100 is placed in the priority position of the charging area A, the informing module 13 identifies the new priority position having a higher priority order than that of the second device 100, and, as illustrated in FIG. 9B, informs the user of the new priority position by lighting the light-emitting elements in a position indicated by hatching in FIG. 9B bordering the new priority position. The display 3A provided around the charging area A can use not only the light-emitting elements such as LEDs but also various components. In this manner, by employing the configuration in which the display 3A is provided around the charging area A, and the informing module 13 informs the user of the priority position by controlling the operation of the display 3A provided around the charging area A, it is possible to allow the user to recognize the priority position without affecting the non-contact charging of the devices 100.

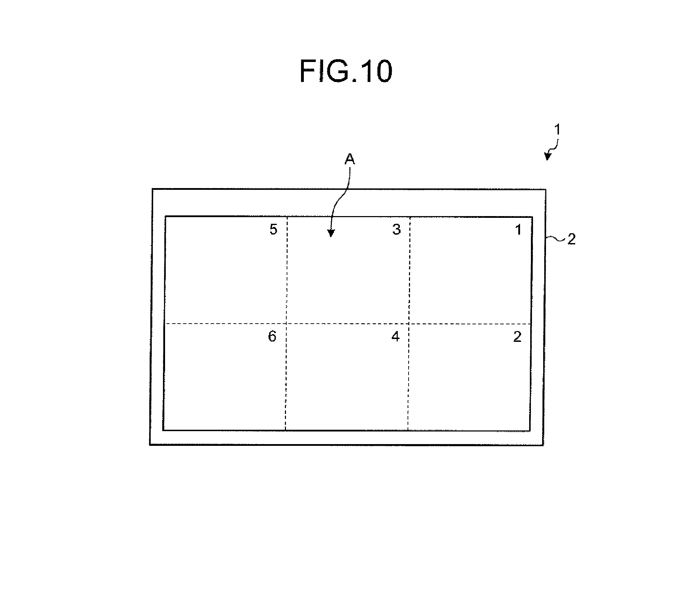

As a method for informing the user of the priority position, it is also useful to apply some kind of marking in accordance with the rule for determining the priority position to the charging area A. For example, if the rule for determining the priority order is set, as described above, so that the priority order is higher as the values of the X-coordinate and the Y-coordinate are larger, the charging area A is sectioned into a plurality of regions, and each of the regions is marked with a number indicating the priority order sequentially from a region having larger values of the X-coordinate and the Y-coordinate, as illustrated in FIG. 10. Thereby, even while the devices 100 are not placed on the charging area A, the user can intuitively recognize a region having a higher priority order in the charging area A.

As has been described in detail by illustrating the specific examples, with the charging device 1 according to the embodiment, the informing module 13 informs the user of the priority position having a higher priority order than that of the device 100 already placed on the charging area A. Therefore, when the user tries to place a device 100 desired by a user to preferentially be charged, it is possible to allow the user correctly recognize where to place the device 100 in the charging area A, and thus to improve user-friendliness.

Also, with the charging device 1 according to the embodiment, the charge controller 12 performs the charging of the devices 100 in the prioritized charge mode, and, when the remaining battery percentage of all of the devices 100 reach the threshold, the charge controller 12 switches the control mode from the prioritized charge mode to the equalizing charge mode, and continues charging the respective devices 100. Thereby, it is possible, for example, to charge the devices 100 sequentially from the device 100 having a higher priority order into an immediately usable state, and thereafter, to take time to perform remaining charging of all of the devices 100. Thus, the user-friendliness can be further improved.

Furthermore, with the charging device 1 according to the embodiment, if the mode selector switch 4 is operated while the charging of the devices 100 is performed in the prioritized charge mode, the charge mode is switched from the prioritized charge mode to the equalizing charge mode regardless of the remaining battery percentage of the device 100. Therefore, the mode can be switched in accordance with the intention of the user, and thus, the user-friendliness can be further improved.

Furthermore, with the charging device 1 according to the embodiment, the informing module 13 provides information of the priority position in the charging area A by controlling the operation of the display 3 provided in the position overlapping with the charging area A. Therefore, the user can be allowed to intuitively recognize the priority position.

In the case in which the display 3A is provided around the charging area A, and the informing module 13 provides information of the priority position by controlling the operation of the display 3A provided around the charging area A, it is possible to allow the user to recognize the priority position without affecting the non-contact charging of the devices 100.

Moreover, in the case in which the display 3 performs the display differently between the case in which the new device 100 is placed at the priority position and the case in which the new device 100 is placed at a position that is not the priority position, the user can be allowed to surely recognize whether the device 100 is placed at the priority position.

The functions in the controller 10 of the charging device 1 according to the embodiment are implemented, as an example, by a program executed by the CPU of the controller 10. The program executed by the CPU is provided, for example, by being preinstalled in the ROM or the like in the controller 10. The program may be configured to be provided by being recorded, as files in an installable or an executable format, in a computer-readable recording medium such as a CD-ROM, a flexible disk (FD), a CD-R, or a digital versatile disc (DVD). The program may alternatively be configured to be provided by being stored on a computer connected to a network such as the Internet and by being downloaded via the network. The program may also be configured to be provided or distributed via a network such as the Internet.

The program executed by the CPU is composed of modules including the priority order determination module 11, the charge controller 12, and the informing module 13 described above. As actual hardware, the CPU reads out the program from the ROM or the like and executes the program, whereby the above-mentioned modules are loaded into the main memory (RAM) and generated in the main memory.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A charging device (1) configured to charge a device (100) placed at a charging area (A) in a non-contact manner, the charging device comprising:
a determination module (11) configured to determine priority orders indicating from which one of a plurality of devices (100) is to be preferentially charged, based on positions of the respective devices (100) placed at the charging area (A), when the devices (100) are placed at the charging area (A);
a charge controller (12) configured to control the charging of the devices (100) placed at the charging area (A) according to the priority orders; and
an informing module (13) configured to provide information of a priority position in the charging area (A) having a higher priority order than the priority orders of the devices (100) already placed at the charging area (A).

2. The charging device of Claim 1, further comprising an acquiring module (6) configured to acquire remaining battery percentages of the devices placed at the charging area (A), wherein
the charge controller (12) comprises:
a first control mode for controlling the charging of the devices (100) placed at the charging area (A) according to the priority orders; and
a second control mode for controlling the charging of the devices (100) so that the devices (100) placed at the charging area (A) are equally charged regardless of the priority orders, and
the charge controller (12) is configured to switch a device to be charged from one of the devices (100) having a higher priority order to other one of the devices (100) having a lower priority order if the remaining battery percentage of the one of the devices (100) having the higher priority order reaches a predetermined threshold in the first control mode, and to switch the control mode from the first control mode to the second control mode if the remaining battery percentage of all of the devices (100) placed at the charging area (A) reach the threshold.

3. The charging device of Claim 2, further comprising a switch (4) configured to be operable by a user, wherein
the charge controller (12) is configured to switch the control mode from the first control mode to the second control mode regardless of the remaining battery percentage of the devices (100) placed at the charging area (A) if the switch (4) is operated while the charge controller (12) is performing the control in the first control mode.

4. The charging device of Claim 1, further comprising a display module (3) placed at the charging area (A), wherein
the informing module (13) is configured to provide information of the priority position by controlling operation of the display module (3) according to the priority position.

5. The charging device of Claim 1, further comprising a display module (3A) placed around the charging area (A), wherein
the informing module (13) is configured to provide information of the priority position by controlling operation of the display module (3A) according to the priority position.

6. The charging device of Claim 4 or 5, wherein the display module (3 or 3A) is configured to perform display differently between a case in which a new device (100) is placed at the priority position and a case in which the new device (100) is placed at a position different from the priority position.
